# EUROPÄISCHE PATENTANMELDUNG

(11) **EP 4 718 674 A1**
(43) Veröffentlichungstag der Anmeldung: **01.04.2026**
(21) Anmeldenummer: 25201841.1
(22) Anmeldetag: 12.09.2025
(51) Int. Cl.: H02J 7/40, G06F 8/65, H01M 10/42, H01M 50/247, H02J 7/80, H02J 7/92

(54) **VERFAHREN ZUM KONFIGURIEREN UND/ODER AKTUALISIEREN EINES AKKUMULATORS**

(30) Priorität: 27.09.2024 DE 102024128101
(71) Anmelder: Einhell Germany AG, 94405 Landau / Isar (DE)
(72) Erfinder: Thannhuber, Markus, 94405 Landau (DE); Szekacs, Endre, 94363 Oberschneiding (DE); Fech, Daniel, 86647 Buttenwiesen (DE); Walter, Juergen, 88682 Salem (DE)
(74) Vertreter: Canzler & Bergmeier Patentanwälte Partnerschaft mbB

(57) **Zusammenfassung**

Die vorliegende Erfindung betrifft ein Verfahren zum Konfigurieren und/oder Aktualisieren eines Akkumulators (2), vorzugsweise eines Arbeitsgeräteakkumulators, insbesondere eines IoT-Akkumulators und/oder eines IoT-Arbeitsgeräteakkumulators, bei dem zumindest eine Steuereinheit (3, 31) den Akkumulator (2) und/oder ein mit dem Akkumulator (2) gekoppeltes Endgerät (4) steuert und/oder überwacht.

## Beschreibung

Die vorliegende Erfindung betrifft ein Verfahren zum Konfigurieren und/oder Aktualisieren eines Akkumulators, vorzugsweise eines Arbeitsgeräteakkumulators, Gartengeräteakkumulator und/oder Werkzeuggeräteakkumulator, insbesondere eines IoT-Akkumulators und/oder eines IoT-Arbeitsgeräteakkumulators, IoT-Gartengeräteakkumulator und/oder IoT-Werkzeuggeräteakkumulator, bei dem zumindest eine Steuereinheit den Akkumulator und/oder ein mit dem Akkumulator gekoppeltes Endgerät steuert und/oder überwacht.

Gattungsgemäße Akkumulatoren sind seit langem bekannt. Sie dienen beispielsweise der Energieversorgung von Elektrowerkzeugen oder Endgeräten im Allgemeinen. Dabei werden meist mehrere Akkumulatoren im Wechsel verwendet, um Unterbrechungen der Arbeit mit dem Elektrowerkzeug zu vermeiden. Die in den letzten Jahrzehnten gestiegenen Kapazitäten erlauben es, auch größere Elektrogeräte, wie beispielsweise Rasenmäher, mit Akkumulatoren zu betreiben. Meist verwenden Hersteller von Elektrogeräten Ackumulatorsysteme mit entsprechenden Ladegeräten und Akkumulatoren, deren Energieschnittstelle auf bestimmte Weise ausgeführt ist, so dass Akkumulatoren eines Herstellers in der Regel nicht mit den Elektrogeräten eines anderen Herstellers kompatibel sind. Der Kauf eines Akkumulatorsystems trägt also stark zur Kundenbindung eines Elektrogeräteherstellers bei.

Aufgabe der vorliegenden Erfindung ist es, ein sicheres und/oder flexibel einsetzbares Verfahren zum Konfigurieren und/oder Aktualisieren eines Akkumulators zu schaffen. Zusätzlich oder alternativ kann mit dem Verfahren der Akkumulator für spezifische Anwendungswünsche konfiguriert werden.

Die Aufgabe wird gelöst durch ein Verfahren mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein Verfahren zum Konfigurieren und/oder Aktualisieren eines Akkumulators. Der Akkumulator, oder auch abgekürzt Akku, kann ein Arbeitsgeräteakkumulator, ein Gartengeräteakkumulator, ein Werkzeuggeräteakkumulator. und/oder ein Endgeräteakkumulator sein. Des Weiteren kann der Akku ein IoT-Akkumulator und/oder ein IoT-Arbeitsgeräteakkumulator sein. Zusätzlich oder alternativ kann der Akku ein loT-Gartengeräteakkumulator und/oder IoT-Werkzeuggeräteakkumulator sein. Bei einem IoT-Akku handelt es sich um einen Internet-of-Things-Akku. Hierbei können die Akkus und/oder die daran angekoppelten Arbeitsgeräte und/oder Endgeräte und/oder übergeordnete Systeme, beispielsweise vom Akkuhersteller, miteinander vernetzt werden. Mit Hilfe des Akkumulators können verschiedene Endgeräte oder auch Arbeitsgeräte mit elektrischer Energie versorgt werden. Der Akku ist ferner ein mobiler und/oder tragbarer Akku. Der Akku kann somit für Handwerksarbeiten und/oder für Gartenarbeiten eingesetzt werden.

Beim Verfahren steuert und/oder überwacht zumindest eine Steuereinheit den Akkumulator und/oder ein mit dem Akkumulator gekoppeltes Endgerät.

Dies führt zu einer verbesserten Kontrolle und/oder Steuerung des Akkumulators und/oder des Endgeräts. Die Verwendung einer Steuereinheit ermöglicht eine kontinuierliche Überwachung und/oder Anpassung an die Betriebsbedingungen, anwendungsspezifische Wünsche und/oder benutzerdefinierte Anwendungswünsche des Akkus und/oder des Endgeräts.

Des Weiteren werden Betriebsprogrammdaten von zumindest einer Bereitstellungseinheit eines Systems über eine bidirektionale Akkudatenschnittstelle an den Akkumulator übertragen, um die Steuereinheit zum Steuern und/oder Überwachen des Akkumulators und/oder des gekoppelten Endgeräts zu konfigurieren und/oder zu aktualisieren. Mit Hilfe der bidirektionalen Akkudatenschnittstelle können Daten gesendet und empfangen werden. Somit kann eine bidirektionale Kommunikation ausgebildet werden. Durch die Übertragung der Betriebsprogrammdaten wird eine flexible Anpassung der Steuerungsparameter, Steuerbefehle, Steuerungssoftware und/oder Steuerungsabläufe ermöglicht, was zu einer verbesserten Leistung des Akkumulators und/oder des Endgeräts führt. Ein Steuerungsprogramm kann hierbei beispielsweise auch nach eigenen Benutzerwünschen erstellt werden, die als Betriebsprogrammdaten von der Bereitstellungseinheit an den Akku übertragen werden. Hierbei kann eine individuelle Betriebssoftware anhand der Betriebsprogrammdaten erstellt werden, um den Akku und/oder das Endgerät spezifisch zu steuern. Zusätzlich oder alternativ kann die Betriebssoftware bereits in der Betriebsprogrammdaten enthalten sein. Insbesondere kann damit ein Steuerungsprogramm für das Endgerät und/oder den Akku nach eigenen Wünschen angepasst werden. Im Folgenden werden die Begriffe Steuerungssoftware, Betriebssoftware, Steuerungsprogramm, Betriebsprogramm und/oder Firmware usw. verwendet, wobei diese zueinander Synonyme sein können.

Vorteilhafterweise werden die Betriebsprogrammdaten automatisch von der zumindest einen Bereitstellungseinheit über die Akkudatenschnittstelle angefordert und/oder an den Akkumulator übertragen. Die automatische Anforderung der Betriebsprogrammdaten stellt sicher, dass immer die aktuellen Programmversionen verwendet werden, was die Systemstabilität erhöht. Die Automatisierung des Prozesses reduziert die Notwendigkeit für Benutzereingriffe, was zu einer effizienteren Handhabung des Systems führt.

In einer vorteilhaften Weiterbildung der Erfindung prüft die Steuereinheit, insbesondere automatisch, das Vorhandensein neuer Betriebsprogrammdaten. Dies ermöglicht eine kontinuierliche Aktualisierung der Betriebssoftware, was zur Verbesserung der Akkumulatorleistung und/oder Endgeräteleistung beiträgt. Durch die automatische Prüfung wird sichergestellt, dass stets die neuesten Funktionen und Sicherheitsupdates auf dem Akkumulator vorhanden sind.

Darüber hinaus ist es vorteilhaft, wenn als Betriebsprogrammdaten eine Firmware von zumindest einer Bereitstellungseinheit übertragen wird.

Die Übertragung der Firmware ermöglicht es, neue Funktionen und/oder Sicherheitsupdates in den Akkumulator zu integrieren. Dies trägt zur Langlebigkeit, verbesserten Leistung und/oder Sicherheit des Akkumulators und/oder des Endgerätes bei. Die Firmware wird oder wurde hierbei von der Bereitstellungseinheit erstellt und/oder liegt auf der Bereitstellungseinheit bereit, um übertragen zu werden. Es wird somit die finale Firmware übertragen, mit der unmittelbar eine vorhandene Firmware aktualisiert wird.

Es ist vorteilhaft, wenn mittels der übertragenen Betriebsprogrammdaten die Firmware für den Akkumulator, insbesondere automatisch, erstellt wird.

Die automatische Erstellung der Firmware spart Zeit und minimiert Fehler, die bei manuellen Prozessen auftreten könnten.

Vorteilhafterweise wird mittels der übertragenen Betriebsprogrammdaten und/oder der neuen Firmware eine alte Firmware des Akkumulators, insbesondere automatisch, aktualisiert. Die automatische Aktualisierung der Firmware verbessert die Leistung und/oder Sicherheit des Akkumulators, indem sie veraltete Versionen ersetzt. Dieser Prozess stellt sicher, dass der Akkumulator immer auf dem neuesten Stand der Technik ist.

Von Vorteil ist es auch, wenn nach der Aktualisierung der Firmware des Ackumulators eine Diagnose und/oder ein Initialisierungstest der aktualisierten Firmware durchgeführt wird. Dies gewährleistet, dass die neue Firmware ordnungsgemäß funktioniert und keine Fehler oder Inkompatibilitäten vorliegen. Die Durchführung eines Initialisierungstests erhöht die Betriebssicherheit und verringert das Risiko von Fehlfunktionen nach einem Update.

Gemäß einer vorteilhaften Weiterbildung der Erfindung wird die Versionsnummer der zu aktualisierenden und/oder aktualisierten Firmware des Akkumulators überprüft. Durch die Überprüfung der Versionsnummer wird sichergestellt, dass die korrekte Firmware-Version installiert und verwendet wird. Dies reduziert die Wahrscheinlichkeit von Versionskonflikten und damit verbundenen Funktionsstörungen.

Des Weiteren ist es vorteilhaft, wenn die Überprüfung der Versionsnummer der Firmware des Akkumulators von der Bereitstellungseinheit durchgeführt wird. Die Durchführung dieser Überprüfung durch die Bereitstellungseinheit stellt eine zusätzliche Sicherheitsebene für den Akkuhersteller dar und verhindert die Installation falscher Firmware.

Von Vorteil ist es, wenn der Akkumulator bei der zumindest einen Bereitstellungseinheit registriert wird. Die Registrierung des Akkumulators ermöglicht es, seine Nutzung und den Zustand besser zu verfolgen und zu verwalten. Dies erleichtert die Nachverfolgung von Garantieansprüchen und bietet eine Grundlage für zukünftige Updates.

In einer vorteilhaften Weiterbildung der Erfindung wird vor der Übertragung der Betriebsprogrammdaten ein Registrierungswert des Akkumulators mit einer in der zumindest einen Bereitstellungseinheit hinterlegten Registrierung verglichen. Der Vergleich der Registrierungswerte erhöht die Sicherheit, da nur registrierte und/oder autorisierte Akkumulatoren neue Betriebsprogrammdaten erhalten. Dies verhindert unbefugte Zugriffe und/oder Manipulationen am Akkumulator.

Es ist vorteilhaft, wenn der Vergleich des Registrierungswerts des Akkumulators mit der hinterlegten Registrierung von der Bereitstellungseinheit durchgeführt wird. Die Durchführung durch die Bereitstellungseinheit bietet eine zentrale Kontrollinstanz, die die Konsistenz der Daten sicherstellt. Dies reduziert die Gefahr von Missbrauch.

Vorteilhafterweise wird vor der Registrierung eine Authentifizierung des Ackumulators durchgeführt. Die Authentifizierung stellt sicher, dass lediglich autorisierte Akkumulatoren auf die Betriebsprogrammdaten zugreifen können. Dies schützt das System vor potenziellen Sicherheitsrisiken und Missbrauch.

Es ist vorteilhaft, wenn die Authentifizierung des Akkumulators von der Bereitstellungseinheit durchgeführt wird. Die Authentifizierung durch die Bereitstellungseinheit erhöht die Sicherheit des Systems und verhindert unbefugten Zugriff.

In einer vorteilhaften Weiterbildung der Erfindung werden die Betriebsprogrammdaten bei einer Übereinstimmung des Registrierungswerts des Akkumulators mit der Registrierung in der zumindest einen Bereitstellungseinheit übertragen. Durch diesen Abgleich wird sichergestellt, dass nur authentifizierte Akkus Zugang zu den Betriebsprogrammdaten erhalten. Dies erhöht die Sicherheit des Systems und verhindert mögliche Missbräuche.

Alternativ oder zusätzlich bringt es Vorteile mit sich, wenn bei einer Nicht-Übereinstimmung des Registrierungswerts des Akkumulators mit der Registrierung in der zumindest einen Bereitstellungseinheit die Übertragung der Betriebsprogrammdaten verhindert wird. Dies verhindert, dass unberechtigte Geräte auf sensible Daten zugreifen oder fehlerhafte Updates empfangen.

Von Vorteil ist es, wenn bei der Anforderung der Betriebsprogrammdaten eine Seriennummer des Akkumulators und/oder des Endgeräts übermittelt wird. In Abhängigkeit von zumindest dieser Seriennummer können dann die entsprechenden Betriebsprogrammdaten übertragen werden. Die Übermittlung der Seriennummer ermöglicht eine eindeutige Identifikation des Akkumulators und/oder des Endgeräts, wodurch die korrekten und/oder die passenden Betriebsprogrammdaten bereitgestellt werden können. Dies stellt sicher, dass der Akkumulator immer mit den für seine spezifische Konfiguration und/oder Version geeigneten Betriebsprogrammdaten aktualisiert wird, was die Kompatibilität und Funktionalität verbessert.

Vorteilhafterweise wird mittels der Betriebsprogrammdaten und/oder der Firmware eine Basisfirmware und/oder eine Individualfirmware für den Akkumulator erstellt. Die Möglichkeit, verschiedene Firmware-Typen zu erstellen, erhöht die Flexibilität des Systems und/oder erlaubt eine individuelle Anpassung an spezifische Anforderungen. Dies optimiert die Leistung des Akkumulators für unterschiedliche Anwendungen. Die Basisfirmware bildet hierbei eine Art Kernbetriebssoftware, die für die grundlegenden Funktionen des Ackus und/oder des Endgeräts verantwortlich ist. Von Vorteil ist es, wenn die Basisfirmware vor Benutzerzugriff geschützt ist. Damit kann verhindert werden, dass der Benutzer die Basisfirmware und somit die grundlegenden Funktionen, wie beispielsweise Sicherheitsfunktionen, verändert. Dagegen kann dem Benutzer durch die Individualfirmware die Möglichkeit gegeben werden, eigene Funktionen für den Akku und/oder das Endgerät zu programmieren. Dadurch kann der Benutzer den Akku und/oder das Endgerät an eigene Bedürfnisse anpassen.

In einer vorteilhaften Weiterbildung der Erfindung wird die auf dem Akkumulator befindliche Basisfirmware und/oder Individualfirmware aktualisiert. Durch die Aktualisierung wird sichergestellt, dass der Akkumulator immer mit den neuesten Funktionen, d. h. mit der aktuellen Basisfirmware und/oder Individualfirmware, ausgestattet ist. Dies trägt zur langfristigen Nutzung und Leistungsfähigkeit des Akkumulators bei.

Es ist vorteilhaft, wenn die Basisfirmware einer ersten Steuereinheit und/oder eines ersten Steuerkerns des Akkumulators aktualisiert wird. Alternativ oder zusätzlich bringt es Vorteile mit sich, wenn die Individualfirmware einer zweiten Steuereinheit und/oder eines zweiten Steuerkerns des Akkumulators aktualisiert wird. Die Unterscheidung zwischen Basis- und Individualfirmware ermöglicht eine gezielte Aktualisierung verschiedener Steuerungselemente. Dies verbessert die Effizienz und Anpassungsfähigkeit des Akkumulators an unterschiedliche Betriebsbedingungen. Die Basisfirmware wird hierbei von der ersten Steuereinheit und/oder vom ersten Steuerkern ausgeführt. Zusätzlich oder alternativ wird die Individualfirmware von der zweiten Steuereinheit und/oder vom zweiten Steuerkern ausgeführt.

Darüber hinaus ist es vorteilhaft, wenn zum Übertragen der Betriebsprogrammdaten die Stabilität der Kommunikationsverbindung überprüft wird. Die Überprüfung der Kommunikationsstabilität gewährleistet eine fehlerfreie Datenübertragung und verhindert Abbrüche. Dies erhöht die Zuverlässigkeit des gesamten Systems.

Es ist vorteilhaft, wenn die Betriebsprogrammdaten über eine Nahfunkschnittstelle und/oder über eine Fernfunkschnittstelle übertragen werden. Die Möglichkeit, verschiedene Übertragungstechnologien zu nutzen, erhöht die Flexibilität des Systems und ermöglicht die Anpassung an unterschiedliche Einsatzszenarien.

Des Weiteren ist es von Vorteil, wenn in Abhängigkeit eines Ortes, einer Verfügbarkeit der Kommunikation, eines Ladezustands der zumindest einen Energiespeichereinheit, eines Datenumfangs und/oder einer Wichtigkeit der Daten und/oder der Betriebsprogrammdaten zwischen einer Datenübertragung über die Nahfunkschnittstelle und/oder die Fernfunkschnittstelle umgeschaltet wird. Durch die Möglichkeit des Umschaltens zwischen verschiedenen Übertragungsarten bzw. Übertragungsschnittstellen kann die Effizienz der Datenübertragung optimiert werden. Dies gewährleistet eine konstante Datenverfügbarkeit, selbst unter variierenden Bedingungen.

Darüber hinaus ist es von Vorteil, wenn die Firmware, insbesondere die Basisfirmware und/oder die Individualfirmware, zurückgesetzt wird. Im Falle eines Fehlers während der Firmware-Aktualisierung kann somit auf eine vorherige Version der Firmware zurückgekehrt werden. Hierfür kann ein Zurücksetzmechanismus für die Firmware vorgesehen sein. Diese Funktion erhöht die Systemsicherheit und verringert das Risiko von Fehlfunktionen oder Ausfällen nach einem fehlerhaften Update.

Von Vorteil ist es, wenn ein Benachrichtigungssystem vorhanden ist. Nach einer erfolgreichen Firmware-Aktualisierung kann eine automatische Benachrichtigung an den Benutzer oder die zentrale Einheit gesendet werden. Dies stellt sicher, dass der Update-Prozess dokumentiert und rückverfolgt werden kann.

Weitere Vorteile der Erfindung sind in den nachfolgenden Ausführungsbeispielen beschrieben. Es zeigen:
- **Figur 1**: eine schematische Ansicht eines Systems mit einem Akkumulator und zumindest einer Bereitstellungseinheit,
- **Figur 2**: eine perspektivische Ansicht eines Akkumulators,
- **Figur 3**: eine Schnittansicht eines Akkumulators mit verschiedenen Komponenten,
- **Figur 4**: eine Schnittansicht eines Akkumulators mit zwei Steuereinheiten und
- **Figur 5**: eine Schnittansicht eines Akkumulators mit zwei Steuerkernen.

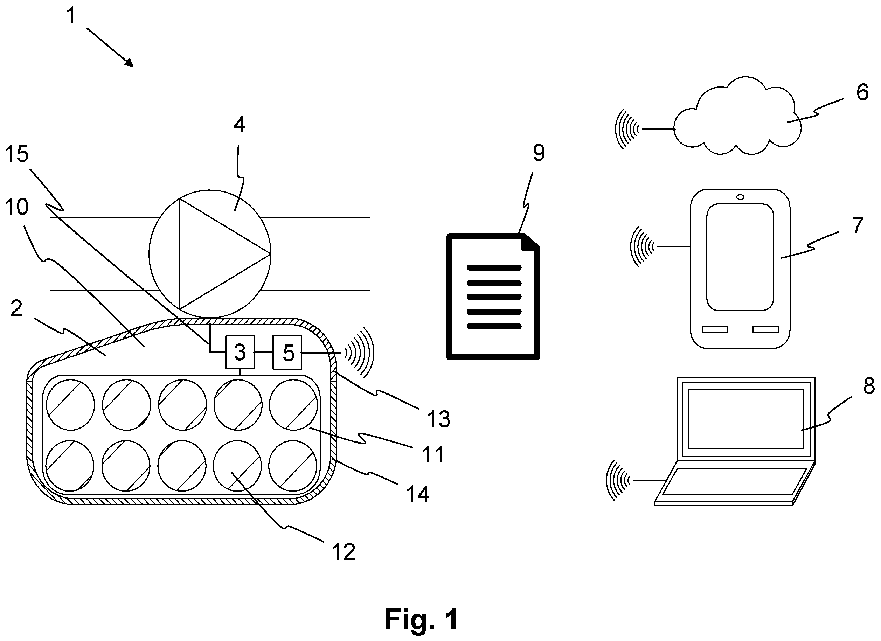

Die Figur 1 zeigt ein System 1 zum Durchführen eines Verfahrens zum Konfigurieren und/oder Aktualisieren einer Betriebssoftware und/oder Firmware eines Akkumulators 2. Insbesondere wird dieses Verfahren verwendet, um sicherzustellen, dass der Akkumulator 2 mit der aktuellen Software, Betriebssoftware bzw. Firmware betrieben wird. Zusätzlich oder alternativ kann damit erreicht werden, dass eine benutzerdefinierte Betriebssoftware und/oder eine Firmware zum Steuern und/oder Überwachen des Akkus 2 und/oder des Endgeräts 4 auf den Akku 2 aufgespielt wird. Dies ist von Vorteil, um die Leistungsfähigkeit, Sicherheit und/oder Effizienz des Akkumulators 2 und/oder des Endgeräts 4 zu gewährleisten. Der hier gezeigte Akku 2 kann ein Arbeitsgeräteakkumulator und/oder ein IoT-Akkumulator und/oder ein IoT-Arbeitsgeräteakkumulator sein. Hierdurch kann eine große Vernetzung des Akkus 2 und/oder des Endgeräts 4 mit übergeordneten Systemen, wie beispielsweise dem Hersteller, über das Internet erzielt werden. Der Akkumulator 2 kann auch abgekürzt als Akku 2 bezeichnet werden.

Der Akku 2 wird in einer der folgenden Figuren näher erläutert.

Beim Verfahren steuert und/oder überwacht zumindest eine Steuereinheit 3, 31 den Akkumulator 2 und/oder das mit dem Akkumulator 2 gekoppelte Endgerät 4. Dadurch wird sichergestellt, dass der Zustand des Akkumulators 2 und/oder des Endgeräts 4 kontinuierlich überwacht und/oder eine optimale Funktion gewährleistet wird. Ein weiterer Vorteil dieses Verfahrens besteht darin, dass die zumindest eine Steuereinheit 3, 31 automatisch prüfen kann, ob neue Betriebsprogrammdaten 9, wie beispielsweise eine Firmware 24, 25, 26, verfügbar sind. Dies ermöglicht es, dass Updates ohne manuelles Eingreifen durchgeführt werden können, was zu einer erheblichen Zeitersparnis führt. Bei dem hier gezeigten Endgerät 4 handelt es sich beispielhaft um eine Pumpe.

Die Betriebsprogrammdaten 9 werden von einer Bereitstellungseinheit 6, 7, 8, wie beispielsweise einer Cloud 6, einem Smartphone 7 und/oder einem Laptop 8, über eine Akkudatenschnittstelle 5 an den Akkumulator 2 übertragen. Zusätzlich oder alternativ können die Betriebsprogrammdaten 9 auch von einer Serverinfrastruktur eines Akkuherstellers übertragen werden. Weiterhin zusätzlich oder alternativ können die Betriebsprogrammdaten 9 auch von einem weiteren Akku 2 übertragen werden. Die Akkudatenschnittstelle 5 kann hierbei derart ausgebildet sein, dass diese eine Kommunikationsverbindung zu einem weiteren Akkumulator 2 ausbilden kann. Infolgedessen ist mit der Akkudatenschnittstelle 5 auch eine bidirektionale Kommunikationsverbindung zwischen zwei oder mehreren Akkus 2 möglich. Dieses, insbesondere automatisierte, Verfahren der Datenübertragung bringt den Vorteil mit sich, dass die Software des Akkumulators 2 stets aktuell gehalten wird, ohne dass eine direkte physische Verbindung zwischen der Bereitstellungseinheit 6, 7, 8 und dem Akkumulator 2 erforderlich ist. Die Betriebsprogrammdaten 9 können hierbei über das Internet übertragen werden. Die Akkudatenschnittstelle 5 kann hierbei eine kabellose Schnittstelle bzw. eine Funkschnittstelle sein.

Des Weiteren kann eine Registrierung des Akkumulators 2 bei der Bereitstellungseinheit 6, 7, 8 durchgeführt werden, bevor die Betriebsprogrammdaten 9 übertragen werden. Dabei wird ein Registrierungswert des Akkumulators 2 mit der in der Bereitstellungseinheit 6, 7, 8 hinterlegten Registrierung verglichen. Diese Maßnahme erhöht die Sicherheit des Systems 1, da die Übertragung der Betriebsprogrammdaten 9 nur dann erfolgt, wenn der Registrierungswert übereinstimmt. Sollte keine Übereinstimmung vorliegen, wird die Übertragung der Daten verhindert, was die Integrität des Systems 1 schützt.

Zusätzlich oder alternativ kann beim Verfahren eine Authentifizierung des Ackumulators 2 durch die Bereitstellungseinheit 6, 7, 8 durchgeführt werden, was eine weitere Schutzebene darstellt. Durch diese Authentifizierung wird sichergestellt, dass nur autorisierte Akkumulatoren 2 Zugriff auf die Betriebsprogrammdaten 9 erhalten. Dies ist besonders wichtig, um die Sicherheit der Betriebsprogrammdaten 9 und den ordnungsgemäßen Betrieb des Akkumulators 2 zu gewährleisten. Wie in diesem Ausführungsbeispiel dargestellt kann die Bereitstellungseinheit 6, 7, 8 eine Cloud 6, beispielsweise von einem Hersteller, ein Smartphone 7 und/oder ein Laptop 8 sein. Über die Cloud 6 können beispielsweise die Betriebsprogrammdaten 9 vom Hersteller bereitgestellt werden. Des Weiteren ist es möglich, dass die Betriebsprogrammdaten 9 auf einer Herstellerseite selbst programmiert und/oder angepasst werden, um benutzerdefinierte und/oder einer speziellen Anwendung des Endgeräts 4 angepasste Funktionen selbst zu erstellen. Diese veränderten bzw. angepassten Betriebsprogrammdaten 9 werden dann von der Cloud 6 an den Akku 2 übertragen, wo die dortige Betriebssoftware mit den neuen Betriebsprogrammdaten 9 aktualisiert wird. Die beschriebenen angepassten und/oder selbst erstellen Betriebsprogrammdaten 9 können zusätzlich oder alternativ auch von einer der anderen Bereitstellungseinheiten 6, 7, 8 verändert, programmiert und/oder angepasst und auf den Akku 2 übertragen werden. Beispielsweise kann hierfür vom Hersteller eine App oder ähnliches bereitgestellt werden, die auf dem Smartphone 7 oder dem Laptop 8 installiert werden kann.

Des Weiteren ist in diesem Ausführungsbeispiel eine Leitung 15 gezeigt und mit einem Bezugszeichen versehen. Die zumindest eine Leitung 15 verbindet hierbei die Komponenten des Akkus 2 elektrisch miteinander.

Merkmale, welche bereits in der zumindest einen vorgegangenen Figur beschrieben sind, können der Einfachheit halber nicht nochmals erklärt werden. Ferner können Merkmale auch erst in dieser oder in zumindest einer der nachfolgenden Figuren beschrieben werden. Des Weiteren werden der Einfachheit halber für gleiche Merkmale gleiche Bezugszeichen verwendet. Außerdem können der Übersichtlichkeit halber nicht mehr alle Merkmale in den folgenden Figuren gezeigt und/oder mit einem Bezugszeichen versehen sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt und/oder mit einem Bezugszeichen versehen sein. Nichtsdestotrotz können Merkmale, welche erst in einer oder mehreren der nachfolgenden Figuren gezeigt sind, auch bereits in dieser oder einer vorangegangenen Figur vorhanden sein.

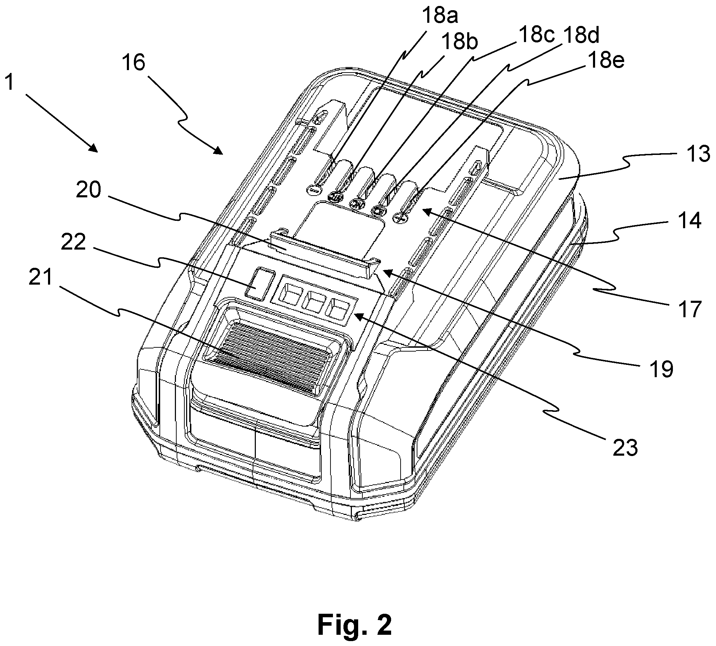

Das in Figur 2 dargestellte Ausführungsbeispiel zeigt eine perspektivische Ansicht eines Akkumulators 2, der Teil des in Figur 1 gezeigten Systems 1 ist. Der Akkumulator 2 umfasst ein hier nicht mit einem Bezugszeichen versehenes Gehäuse, das eine erste Gehäusehälfte 13 und eine zweite Gehäusehälfte 14 umfasst. Diese Gehäusehälften 13, 14 umschließen einen Innenraum 10 des Akkumulators 2, in dem zumindest eine Energiespeichereinheit 11 angeordnet ist. Die zumindest eine Energiespeichereinheit 11 kann hierbei mehrere Einzelzellen 12 umfassen.

Wie aus dem Ausführungsbeispiel der Figur 2 weiterhin hervorgeht, weist der Akkumulator 2 mehrere Kontaktelemente 18a, 18b, 18c, 18d und 18e auf. Diese Kontaktelemente 18a - 18e dienen der elektrischen Verbindung des Akkumulators 2 mit einer externen Vorrichtung, wie beispielsweise einem Ladegerät oder einem Arbeitsgerät bzw. dem Endgerät 4. Die Anordnung der Kontaktelemente 18a - 18e stellt sicher, dass eine stabile und zuverlässige elektrische Verbindung gewährleistet ist, was einen sicheren Energiefluss und/oder Datenfluss zwischen dem Akku 2 und dem Endgerät 4 oder der externen Vorrichtung, beispielsweise dem Ladegerät, ermöglicht. Mit Hilfe der Kontaktelemente 18a - 18e können zusätzlich oder alternativ auch Daten zwischen dem Akku 2 und der externen Vorrichtung, beispielsweise dem Ladegerät und/oder dem Arbeitsgerät bzw. Endgerät 4, übertragen werden.

Der Akku 2 umfasst ferner einen Kontaktbereich 17, in dem die Kontaktelemente 18a - 18e gemäß dem vorliegenden Ausführungsbeispiel angeordnet sind.

Des Weiteren umfasst der Akku 2 einen Koppelbereich 16, mittels dem der Akku 2 mit der externen Vorrichtung, beispielsweise dem Ladegerät und/oder dem Arbeitsgerät bzw. Endgerät 4, gekoppelt werden kann.

Ferner umfasst der Akku 2 einen Fixiermechanismus 19, mittels dem der Akku 2 mit der externen Vorrichtung, beispielsweise dem Ladegerät und/oder dem Arbeitsgerät bzw. Endgerät 4, gekoppelt werden kann. Der Fixiermechanismus 19 umfasst weiterhin ein Fixierelement 20 und/oder ein Betätigungselement 21. Mit Hilfe des Fixierelements 20 kann eine Verbindung zwischen dem Akku 2 und der externen Vorrichtung, beispielsweise dem Ladegerät und/oder dem Arbeitsgerät bzw. Endgerät 4, ausgebildet werden. Bei Betätigung des Betätigungselements 21 kann der Akku 2 wieder von der externen Vorrichtung, beispielsweise dem Ladegerät oder dem Endgerät 4, gelöst werden. Mittels des Betätigungselements 21 kann der Fixiermechanismus 19 gelöst werden.

Des Weiteren ist in diesem Ausführungsbeispiel des Akkus 2 im Bereich der ersten Gehäusehälfte 13 eine Taste 22 angeordnet, mit der der Benutzer eine Anzeige 23 aktivieren kann. Die Anzeige 23 weist in diesem Ausführungsbeispiel mehrere LEDs auf, die den aktuellen Ladezustand des Akkumulators 2 signalisieren können.

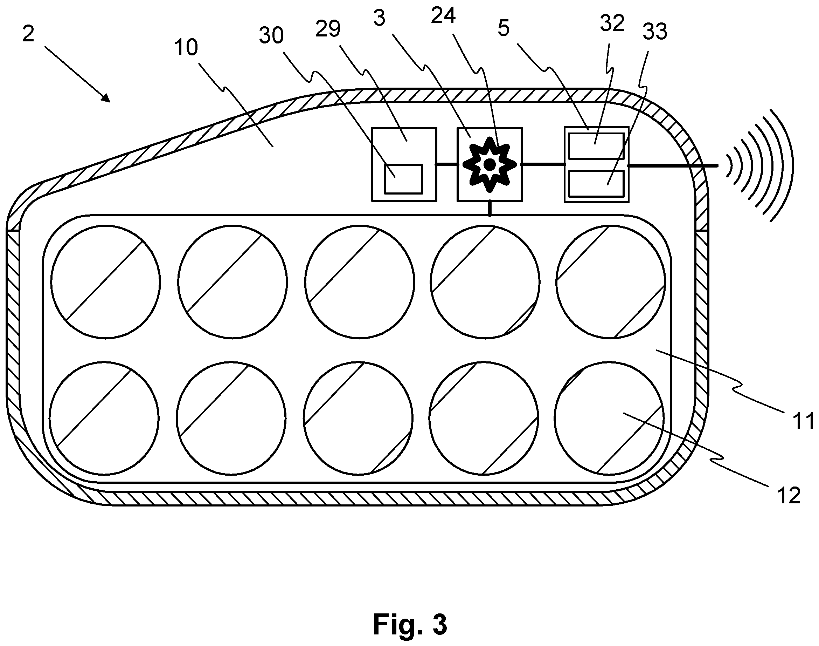

Das in Figur 3 dargestellte Ausführungsbeispiel zeigt eine schematische Schnittansicht des Akkumulators 2. Der Akku 2 umfasst den Innenraum 10, in dem die zumindest eine Energiespeichereinheit 11 angeordnet ist. Die zumindest eine Energiespeichereinheit 11 umfasst die mehreren Einzelzellen 12.

Die Figur 3 zeigt weiterhin, dass die zumindest eine Steuereinheit 3, 31 eine Firmware 24 umfasst. Gemäß diesem Ausführungsbeispiel umfasst der Akku 2 die erste Steuereinheit 3. Diese erste Steuereinheit 3 und/oder die im Folgenden gezeigte zweite Steuereinheit 31 kann die Firmware 24 betreiben bzw. kann von der Firmware 24 betrieben werden. Die Firmware 24 ist das Betriebssystem, die Betriebssoftware oder das Betriebsprogramm für die zumindest eine Steuereinheit 3, 31 bzw. für die hier gezeigte erste Steuereinheit 3. Mit Hilfe der Firmware 24 können Steuer- und/oder Überwachungsbefehle und/oder die Steuer- und/oder Überwachungsabläufe festgelegt werden. In der Firmware 24 können Steuerungsbefehle, Steuerungsabläufe und/oder Überwachungsbefehle und/oder Überwachungsabläufe für den Akku 2 und/oder das Endgerät 4 enthalten sein. Durch eine Aktualisierung der Firmware 24 durch die Betriebsprogrammdaten 9 können diese Steuerungsbefehle und/oder Steuerungsabläufe und/oder Überwachungsbefehle und/oder Überwachungsabläufe ebenfalls aktualisiert werden. Hierbei können diese besagten Befehle und/oder Abläufe vom Benutzer selbst programmiert und/oder angepasst und/oder verändert werden, um eine anwendungsspezifische Steuerung und/oder Überwachung des Akkus 2 und/oder des Endgeräts 4 zu ermöglichen.

Die hier gezeigte Firmware 24 kann als Betriebsprogrammdaten 9 über die Akkudatenschnittstelle 5 auf den Akkumulator 2 aufgespielt werden. Zusätzlich oder alternativ kann die Firmware 24 auch anhand der Betriebsprogrammdaten 9 erstellt und/oder bei Bedarf aktualisiert werden.

Die Übertragung der Betriebsprogrammdaten 9 kann gemäß dem vorliegenden Ausführungsbeispiel über verschiedene Kommunikationsschnittstellen erfolgen. Gemäß der Figur 3 umfasst der Akkumulator 2 eine Nahfunkschnittstelle 32 und/oder eine Fernfunkschnittstelle 33. Die Betriebsprogrammdaten 9 können somit über eine Nahfeldkommunikations- und/oder über eine Fernkommunikationsverbindung übertragen werden, abhängig von der Verfügbarkeit der Kommunikationsverbindung und gegebenenfalls anderen Faktoren, wie beispielsweise dem Ladezustand des Akkumulators 2 und/oder der Wichtigkeit der zu übertragenden Betriebsprogrammdaten 9.

Des Weiteren kann auch, insbesondere automatisch, zwischen der Nahfunkschnittstelle 32 und der Fernfunkschnittstelle 33 umgeschaltet werden, je nach den äußeren Bedingungen, wie der Stabilität der Kommunikationsverbindung und/oder der Verfügbarkeit des Netzes. Dies gewährleistet eine stabile und zuverlässige Übertragung der Betriebsprogrammdaten 9 und minimiert das Risiko von Übertragungsfehlern.

Zusätzlich kann der Akku 2 gemäß dem vorliegenden Ausführungsbeispiel einen Datenspeicher 29 umfassen, der einen geschützten Bereich 30 umfasst. Dieser Datenspeicher 29 dient zur Zwischenspeicherung von Firmware-Updates und stellt sicher, dass die Betriebsprogrammdaten 9 während der Übertragung nicht verloren gehen. Des Weiteren kann auf dem Datenspeicher 29, insbesondere im geschützten Bereich 30, die Firmware 24 zum Betreiben des Akkus 2 und/oder des Endgeräts 4 gespeichert sein. Außerdem kann auf dem Datenspeicher 29 die im Folgenden erläuterte Basisfirmware 25 und die Individualfirmware 26 gespeichert sein. Die Basisfirmware 25 dient hierbei als eine Art Kernfirmware, mittels der die Grundfunktionen des Akkus 2 und/oder des Endgeräts 4 definiert sind. Diese Basisfirmware 25 kann aus diesem Grund vorteilhafterweise im geschützten Bereich 30 gespeichert sein, so dass die Basisfirmware 25 vor einem Benutzerzugriff geschützt ist. Dagegen kann die Individualfirmware 26 vom Benutzer verändert werden, um kundenspezifische Funktionen des Akkus 2 und/oder des Endgeräts 4 zu definieren. Die Individualfirmware 26 kann beispielsweise dadurch verändert werden, indem neue Betriebsprogrammdaten 9, insbesondere durch den Benutzer manuell veranlasst, auf den Akku 2 übertragen werden. Daraufhin kann die Individualfirmware 26 aktualisiert werden. Zusätzlich oder alternativ kann allerdings die Basisfirmware 25 vor Benutzerzugriff geschützt bleiben, um die Grundfunktionen des Akkus 2 und/oder des Endgeräts 4 zu schützen, die beispielsweise Sicherheitsfunktionen umfassen.

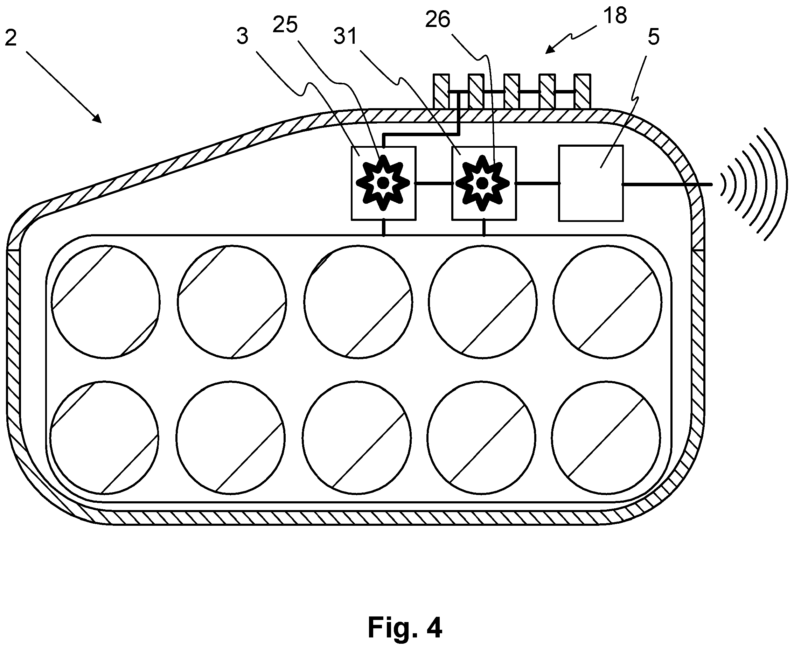

Das in Figur 4 dargestellte Ausführungsbeispiel zeigt eine schematische Schnittansicht eines Akkumulators 2, der eine erste Steuereinheit 3 und eine zweite Steuereinheit 31 umfasst. Diese beiden Steuereinheiten 3, 31 können jeweils zur Überwachung des Akkus 2 und des Endgeräts 4 zuständig sein. Wie aus Figur 4 hervorgeht, sind sowohl die bereits erwähnte Basisfirmware 25 als auch die Individualfirmware 26 auf dem Akkumulator 2 vorhanden, die über die Akkudatenschnittstelle 5 aktualisiert werden können. Die Basisfirmware 25 und/oder die Individualfirmware 26 können hierbei durch die Betriebsprogrammdaten 9 übertragen und/oder aus den Betriebsprogrammdaten 9 erstellt werden.

Die Basisfirmware 25 ist gemäß dem vorliegenden Ausführungsbeispiel der ersten Steuereinheit 3 des Akkumulators 2 zugeordnet, während die Individualfirmware 26 der zweiten Steuereinheit 31 zugeordnet ist. Diese Trennung der Firmware 25, 26 ermöglicht eine spezifische Anpassung der Funktionen der einzelnen Steuereinheiten 3, 31, was zu einer flexiblen und effizienten Steuerung und/oder Überwachung des Akkumulators 2 und des Endgeräts 4 beiträgt. Die Trennung der Basisfirmware 25 und der Individualfirmware 26 auf die beiden Steuereinheiten 3, 31 oder auf die beiden in der nächsten Figur erläuterten Steuerkerne 27, 28 verhindert, dass sich die beiden Firmware 25, 26 gegenseitig beeinflussen und/oder dass beide Firmware 25, 26 unabhängig voneinander betrieben werden.

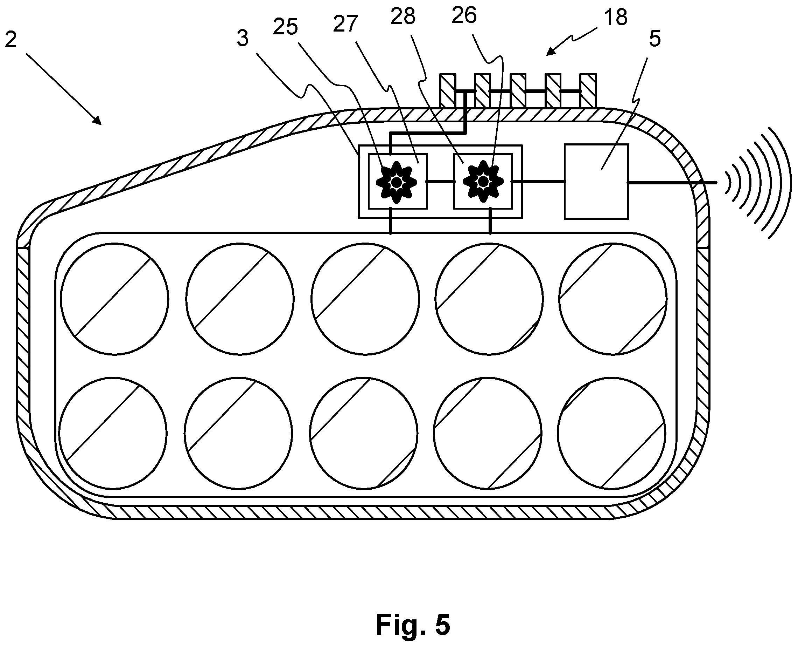

Das in Figur 5 dargestellte Ausführungsbeispiel zeigt nochmals eine schematische Schnittansicht des Akkumulators 2, in dem die erste Steuereinheit 3 einen ersten Steuerkern 27 und einen zweiten Steuerkern 28 aufweist. Diese beiden Steuerkerne 27, 28 dienen zur Steuerung und/oder Überwachung des Akkumulators 2 und/oder des Endgeräts 4. Hierbei kann beispielsweise der erste Steuerkern 27, wie die erste Steuereinheit 3 der Figur 4, den Akku 2 steuern und/oder überwachen. Dagegen kann beispielsweise der zweite Steuerkern 28, wie die zweite Steuereinheit 31 der Figur 4, das Endgerät 4 steuern und/oder überwachen. Hierfür umfasst der erste Steuerkern 27 die Basisfirmware 25 und der zweite Steuerkern 28 die Individualfirmware 26. Diese Trennung der Firmware-Funktionalitäten durch die Basisfirmware 25 und die Individualfirmware 26 ermöglicht eine gezielte Steuerung und/oder Überwachung des Akkumulators 2 bzw. des Endgeräts 4. Die Trennung der Steuerung und/oder Überwachung mittels der Basisfirmware 25 und der Individualfirmware 26 erlaubt es, spezifische Software-Updates für einzelne Funktionsbereiche des Akkumulators oder des Endgeräts 4 durchzuführen.

### Bezugszeichenliste

- 1: System
- 2: Akkumulator
- 3: erste Steuereinheit
- 4: Endgerät
- 5: Akkudatenschnittstelle
- 6: Cloud
- 7: Smartphone
- 8: Laptop
- 9: Betriebsprogrammdaten
- 10: Innenraum
- 11: Energiespeichereinheit
- 12: Einzelzelle
- 13: erste Gehäusehälfte
- 14: zweite Gehäusehälfte
- 15: Leitung
- 16: Koppelbereich
- 17: Kontaktbereich
- 18: Kontaktelement
- 19: Fixiermechanismus
- 20: Fixierelement
- 21: Betätigungselement
- 22: Taste
- 23: Anzeige
- 24: Firmware
- 25: Basisfirmware
- 26: Individualfirmware
- 27: erster Steuerkern
- 28: zweiter Steuerkern
- 29: Datenspeicher
- 30: geschützter Bereich
- 31: zweite Steuereinheit
- 32: Nahfunkschnittstelle
- 33: Fernfunkschnittstelle

## Patentansprüche

1. Verfahren zum Konfigurieren und/oder Aktualisieren eines Akkumulators (2), vorzugsweise eines Arbeitsgeräteakkumulators, Gartengeräteakkumulator und/oder Werkzeuggeräteakkumulator, insbesondere eines IoT-Akkumulators und/oder eines IoT-Arbeitsgeräteakkumulators, IoT-Gartengeräteakkumulator und/oder IoT-Werkzeuggeräteackumulator,
bei dem zumindest eine Steuereinheit (3, 31) den Akkumulator (2) und/oder ein mit dem Akkumulator (2) gekoppeltes Endgerät (4) steuert und/oder überwacht,
**dadurch gekennzeichnet,**
**dass** von zumindest einer Bereitstellungseinheit (6, 7, 8) eines Systems (1) Betriebsprogrammdaten (9) für die Steuereinheit (3, 31) zum Steuern und/oder Überwachen des Akkumulators (2) und/oder des mit dem Akkumulator (2) gekoppelten Endgeräts (4) über eine bidirektionale Akkudatenschnittstelle (5) an den Akkumulator (2) übertragen werden.

2. Verfahren nach dem vorherigen Anspruch, **dadurch gekennzeichnet, dass** die Betriebsprogrammdaten (9) automatisch von der zumindest einen Bereitstellungseinheit (6, 7, 8) über die Akkudatenschnittstelle (5) angefordert und/oder an den Akkumulator (2) übertragen werden.

3. Verfahren nach einem oder mehreren der vorherigen Ansprüche,
**dadurch gekennzeichnet, dass** die Steuereinheit (3, 31), insbesondere automatisch, ein Vorhandensein neuer Betriebsprogrammdaten (9) prüft und/oder
dass als Betriebsprogrammdaten (9) eine Firmware (24, 25, 26) von zumindest einer Bereitstellungseinheit (6, 7, 8) übertragen wird und/oder
dass mittels den übertragenen Betriebsprogrammdaten die Firmware (24, 25, 26) für den Akkumulator (2), insbesondere automatisch, erstellt wird.

4. Verfahren nach einem oder mehreren der vorherigen Ansprüche, **dadurch gekennzeichnet, dass** mittels den übertragenen Betriebsprogrammdaten (9) und/oder der neuen Firmware (24, 25, 26) eine alte Firmware (24, 25, 26) des Akkumulators (2), insbesondere automatisch, aktualisiert wird und/oder
dass nach Aktualisierung der Firmware (24, 25, 26) des Akkumulators (2) eine Diagnose und/oder ein Initialisierungstest der aktualisierten Firmware (24, 25, 26) durchgeführt wird.

5. Verfahren nach einem oder mehreren der vorherigen Ansprüche, **dadurch gekennzeichnet, dass** eine Versionsnummer der zu aktualisierenden und/oder aktualisierten Firmware (24, 25, 26) des Akkumulators (2) überprüft wird und/oder
dass die Überprüfung der Versionsnummer der Firmware (24, 25, 26) des Akkumulators (2) von der Bereitstellungseinheit (6, 7, 8) durchgeführt wird.

6. Verfahren nach einem oder mehreren der vorherigen Ansprüche, **dadurch gekennzeichnet, dass** der Akkumulator (2) bei der zumindest einen Bereitstellungseinheit (6, 7, 8) registriert wird.

7. Verfahren nach einem oder mehreren der vorherigen Ansprüche, **dadurch gekennzeichnet, dass** vor der Übertragung der Betriebsprogrammdaten (9) ein Registrierungswert des Akkumulators (2) mit einer in der zumindest einer Bereitstellungseinheit (6, 7, 8) hinterlegten Registrierung verglichen wird und/oder
dass die Bereitstellungseinheit (6, 7, 8) den Vergleich des Registrierungswerts des Akkumulators (2) mit der in der Bereitstellungseinheit (6, 7, 8) hinterlegten Registrierung durchführt.

8. Verfahren nach einem oder mehreren der vorherigen Ansprüche, **dadurch gekennzeichnet, dass**, insbesondere vor der Registrierung, eine Authentifizierung des Akkumulators (2) durchgeführt wird und/oder
dass die Authentifizierung des Akkumulators (2) die Bereitstellungseinheit (6, 7, 8) durchführt.

9. Verfahren nach einem oder mehreren der vorherigen Ansprüche, **dadurch gekennzeichnet, dass** bei einer Übereinstimmung des Registrierungswerts des Akkumulators (2) und der Registrierung in der zumindest einen Bereitstellungseinheit (6, 7, 8) die Betriebsprogrammdaten (9) übertragen werden und/oder
dass bei einer Nicht-Übereinstimmung des Registrierungswerts des Akkumulators (2) und der Registrierung in der zumindest einen Bereitstellungseinheit (6, 7, 8) die Übertragung der Betriebsprogrammdaten (9) verhindert wird.

10. Verfahren nach einem oder mehreren der vorherigen Ansprüche, **dadurch gekennzeichnet, dass** bei der Anforderung der Betriebsprogrammdaten (9) eine Seriennummer des Akkumulators (2) und/oder des Endgeräts (4) übermittelt wird und dass in Abhängigkeit zumindest dieser Seriennummer entsprechende Betriebsprogrammdaten (9) übertragen werden.

11. Verfahren nach einem oder mehreren der vorherigen Ansprüche, **dadurch gekennzeichnet, dass** mittels der Betriebsprogrammdaten (9) und/oder der Firmware (24) eine Basisfirmware (25) und/oder eine Individualfirmware (26) für den Akkumulator (2) erstellt wird und/oder dass die auf dem Akkumulator (2) befindliche Basisfirmware (25) und/oder Individualfirmware (26) aktualisiert wird.

12. Verfahren nach einem oder mehreren der vorherigen Ansprüche, **dadurch gekennzeichnet, dass** die Basisfirmware (25) einer ersten Steuereinheit (3) und/oder eines ersten Steuerkerns (27) des Akkumulators (2) aktualisiert wird und/oder
dass die Individualfirmware (26) einer zweiten Steuereinheit (31) und/oder eines zweiten Steuerkerns (28) des Akkumulators (2) aktualisiert wird.

13. Verfahren nach einem oder mehreren der vorherigen Ansprüche, **dadurch gekennzeichnet, dass** zum Übertragen der Betriebsprogrammdaten (9) eine Stabilität der Kommunikationsverbindung überprüft wird.

14. Verfahren nach einem oder mehreren der vorherigen Ansprüche, **dadurch gekennzeichnet, dass** die Betriebsprogrammdaten (9) über eine Nahfunkschnittstelle (32) und/oder über eine Fernfunkschnittstelle (33) übertragen werden.

15. Verfahren nach einem oder mehreren der vorherigen Ansprüche, **dadurch gekennzeichnet, dass** in Abhängigkeit eines Ortes, einer Verfügbarkeit der Kommunikation, eines Ladezustands der zumindest einen Energiespeichereinheit (11), eines Datenumfangs und/oder einer Wichtigkeit der Daten und/oder der Betriebsprogrammdaten (9) zwischen einer Datenübertragung über die Nahfunkschnittstelle (32) und über die Fernfunkschnittstelle (33) umgeschalten wird.
